# FASCICULE DE BREVET EUROPEEN

(11) **EP 2 755 009 B1**
(45) Date de publication et mention de la délivrance du brevet: **30.03.2016**
(21) Numéro de dépôt: 14150731.9
(22) Date de dépôt: 10.01.2014
(51) Int. Cl.: G01M 13/04

(54) **Système de diagnostic de l'état structurel d'une unité de roulement d'un engin à roues.**
System zur Diagnose der strukturstand von einen Fahrzeug mit Rädern
Diagnostic system for the structural state of a wheeled vehicle

(30) Priorité: 10.01.2013 FR 1350209
(43) Date de publication de la demande: 16.07.2014
(73) Titulaire: NTN-SNR Roulements, 74000 Annecy (FR)
(72) Inventeur: Desbiolles, Pascal, 74570 THORENS GLIERES (FR); Guerre-Chaley, Frédéric, 74230 DINGY SAINT CLAIR (FR); Lenon, Hervé, 74540 GRUFFY (FR)
(74) Mandataire: Derambure Conseil

(56) Documents cités:
- US-A1- 2008 234 964

## Description

L'invention est relative au diagnostic de l'état structurel d'une unité de roulement d'un engin à roues.

Elle a plus spécialement pour objet un système de diagnostic de l'état structurel présent ou prévisionnel d'une unité de roulement implantée sur un engin à roues pour son déplacement et un procédé de mise en oeuvre d'un tel système.

Le document FR 2 944 875 décrit un procédé de détection d'un défaut structurel d'un ensemble mécanique comprenant un organe tournant, prévoyant une analyse préalable d'identification d'une fréquence caractéristique de l'apparition du défaut sur un tour de rotation de l'organe, et les étapes itératives de :
▪ mesure de la vitesse instantanée de rotation de l'organe tournant ;
▪ échantillonnage angulaire de ladite mesure pour obtenir un signal échantillonné qui est représentatif de la vitesse instantanée de rotation de l'organe ;
▪ analyse harmonique spatiale du signal échantillonné pour obtenir un spectre de la vitesse instantanée de rotation de l'organe ;
▪ surveillance de l'amplitude du spectre pour la fréquence caractéristique de sorte, en fonction de ladite amplitude, à en déduire l'apparition du défaut correspondant.

Selon ce document, la mesure de la vitesse est réalisée au moyen d'un codeur solidaire en rotation de l'organe tournant, ledit codeur comprenant une piste multipolaire et d'un capteur fixe.

Ce procédé peut être appliqué au diagnostic embarqué de l'état d'usure d'un ensemble mécanique comprenant un organe tournant pour un véhicule.

Le déposant a déjà élaboré un système de diagnostic de l'état structurel présent ou prévisionnel d'une unité de roulement implantée sur un engin à roues pour son déplacement, qui comprend :
▪ un moyen de mesure de la valeur d'un paramètre des conditions de roulage de l'unité de roulement caractéristique de son état structurel, incluant un capteur de vitesse de rotation de l'unité de roulement, embarqué sur l'engin et associé à l'unité de roulement, apte à mesurer ladite valeur dudit paramètre et à fournir une donnée caractéristique desdites conditions de roulage,
▪ un moyen de calcul et d'analyse, apte, à partir de ladite donnée caractéristique, à fournir une information de diagnostic de l'état structurel présent ou prévisionnel de l'unité de roulement,
▪ un moyen de communication de données, embarqué sur l'engin, apte à transférer dans une zone de couverture ladite donnée caractéristique ou ladite information de diagnostic,
▪ et une unité de recueil de données, dissociée structurellement de l'engin, apte à se trouver dans ladite zone de couverture et à recueillir ladite donnée caractéristique ou ladite information de diagnostic,

Avec une telle réalisation, le système de diagnostic fonctionne indistinctement quel que soit le contexte dans lequel se trouve l'unité de roulement ou le véhicule auquel il appartient. Le contexte dont il est question est par exemple l'accélération du véhicule et/ou son inclinaison et/ou son orientation et/ou l'effort subi par l'unité de roulement et/ou la température ambiante ou celle de l'unité de roulement, cette liste n'étant pas limitative. Ce contexte est donc exogène et/ou endogène à l'unité de roulement. Il est simple ou complexe. Dans tous les cas, le conteste en question influe sur la vitesse de l'unité de roulement ou sur la variation de cette vitesse ou sur le diagnostic prenant en compte cette vitesse ou sa variation.

Dans le cas d'une première approche du diagnostic, l'on peut ne pas tenir compte du contexte et de ses variations et, ce faisant, considérer que le diagnostic est correct, même si le contexte s'est trouvé à un moment ou à un autre, ou en permanence, en dehors de la fourchette d'un paramètre contextuel reflétant ou mesurant le contexte que l'on considérerait comme « normale ».

Mais, le déposant a constaté que dans le cas d'une approche approfondie, notamment plus précise, du diagnostic, il pouvait être gênant de ne pas tenir compte du contexte et de ses variations, surtout si le paramètre contextuel s'est fortement écarté et/ou durablement écarté d'une fourchette considérée comme normale.

En effet, des facteurs tels que l'accélération du véhicule, son inclinaison, son orientation, l'effort subi par l'unité de roulement, la température ambiante ou celle de l'unité de roulement influent sur la vitesse de l'unité de roulement, comme son état structurel, de sorte que le diagnostic peut refléter non pas exactement l'état structurel de l'unité de roulement mais des variations de vitesse dus au contexte. Les deux facteurs - état structurel de l'unité de roulement et contexte - peuvent selon les cas, soit jouer en sens contraire de sorte que le diagnostic tend à sous-estimer la dégradation de l'état structurel du roulement, soit jouer dans le même sens de sorte que le diagnostic tend à surestimer la dégradation de l'état structurel du roulement. Par ailleurs, il peut se révéler important de faire un diagnostic dans certains cas où le contexte est inhabituel.

Tel est le problème à la base de l'invention.

Le document US 2008/234964 décrit un dispositif de diagnostic d'anomalie pour un appareil mécanique ayant une partie pivotante ou glissant par rapport à un élément immobile. Ce dispositif de diagnostic comporte une section de détection, fixée à la partie pivotante ou glissante, et une section de traitement de signal pour déterminer une condition de la partie pivotante ou glissante, et déterminer s'il existe une anomalie dans la partie pivotante ou glissante, sur la base d'un signal détecté par la section de détection. La section de détection comprend des capteurs de vibration et de température. Un tel dispositif peut notamment présenter l'inconvénient d'une usure et d'une consommation électrique importante de la section de détection.

Ci-après, un exposé des caractéristiques de l'invention.

Selon un premier aspect, l'invention a pour objet un système de diagnostic de l'état structurel présent ou prévisionnel d'une unité de roulement implantée sur un engin à roues pour son déplacement, qui comprend :
▪ au moins un moyen de mesure de la valeur d'un paramètre des conditions de roulage de l'unité de roulement caractéristique de son état structurel, embarqué sur l'engin à roues et associé à l'unité de roulement, responsif à un moyen de commande marche/arrêt, apte en marche, à mesurer ladite valeur dudit paramètre et à fournir une donnée caractéristique desdites conditions de roulage,
▪ au moins un moyen de calcul et d'analyse, apte, à partir de ladite donnée caractéristique, à fournir une information de diagnostic de l'état structurel présent ou prévisionnel de l'unité de roulement,
▪ au moins un moyen de communication de données, embarqué sur l'engin à roues, apte à transférer dans une zone de couverture ladite donnée caractéristique ou ladite information de diagnostic,
▪ au moins une unité de recueil de données, dissociée structurellement de l'engin à roues, apte à se trouver dans ladite zone de couverture et à recueillir ladite donnée caractéristique ou ladite information de diagnostic,
▪ au moins un moyen d'évaluation d'un paramètre contextuel significatif soit de l'adéquation soit de l'inadéquation de la mesure du paramètre des conditions de roulage par le moyen de mesure,
▪ le moyen de commande marche/arrêt responsif au moyen d'évaluation d'un paramètre contextuel propre à affecter la mesure du paramètre des conditions de roulage, qui est apte à commander la marche ou l'arrêt du moyen de mesure, selon que le paramètre contextuel évalué est significatif soit de l'adéquation soit de l'inadéquation de la mesure du paramètre des conditions de roulage par le moyen de mesure.

Selon les réalisations, le moyen d'évaluation d'un paramètre contextuel inclut un tachymètre, le paramètre contextuel étant la vitesse de l'engin à roues ou un paramètre fonction de la vitesse, un accéléromètre, le paramètre contextuel étant l'accélération de l'engin à roues, ou un inclinomètre, le paramètre contextuel étant l'inclinaison de l'engin à roues, ou un gyromètre, le paramètre contextuel étant l'orientation de l'engin à roues, ou un capteur d'effort, le paramètre contextuel étant l'effort subi par l'unité de roulement, ou un capteur de température, le paramètre contextuel étant la température, à savoir la température ambiante ou la température de l'unité de roulement.

Le cas échéant, le système de diagnostic comprend plusieurs moyens d'évaluation de plusieurs paramètres contextuels différents choisis dans le groupe incluant un tachymètre, accéléromètre, un inclinomètre, un gyromètre, un capteur d'effort, un capteur de température.

Selon une réalisation, le moyen d'évaluation d'un paramètre contextuel et le moyen de commande marche/arrêt sont embarqués sur l'engin à roues.

Selon une réalisation, le moyen d'évaluation d'un paramètre contextuel est dissocié structurellement de l'engin à roues, moyennant un moyen de communication entre le moyen d'évaluation d'un paramètre contextuel, le moyen de commande marche/arrêt et le moyen de mesure.

Selon une réalisation, le moyen de mesure de la valeur d'un paramètre des conditions de roulage de l'unité de roulement inclut un capteur de vitesse de rotation de l'unité de roulement.

Selon les réalisations, le moyen de de calcul et d'analyse est soit embarqué sur l'engin à roues soit dissocié structurellement de l'engin à roues.

Selon une réalisation, le moyen d'évaluation d'un paramètre contextuel et le moyen de commande marche/arrêt sont associés structurellement.

Selon une réalisation, le moyen d'évaluation d'un paramètre contextuel et le moyen de mesure sont associés structurellement.

Selon une réalisation, le moyen d'évaluation d'un paramètre contextuel et/ou le moyen de commande marche/arrêt est/sont réglable(s) et/ou débrayable(s).

Selon un développement, le système de diagnostic est destiné à plusieurs unités de roulement implantées sur un engin à roues pour son déplacement, qui comprend un ou plusieurs moyens communs à une pluralité d'unités de roulement choisis dans les moyens de mesure, les moyen de calcul et d'analyse, les moyens de communication de données, les moyen d'évaluation d'un paramètre contextuel, les moyens de commande marche/arrêt.

Selon un second aspect, l'invention a pour objet un procédé de mise en oeuvre d'un système de diagnostic de l'état structurel présent ou prévisionnel d'une unité de roulement implantée sur un engin à roues pour son déplacement tel qu'il vient d'être décrit, dans lequel :
▪ moyennant la mise en oeuvre du moyen de mesure, responsifs au moyen de commande marche/arrêt, lorsque le moyen de mesure est en marche, on mesure dans le temps la valeur d'un paramètre des conditions de roulage de l'unité de roulement caractéristique de son état structurel et on fournit une donnée caractéristique desdites conditions de roulage,
▪ moyennant la mise en oeuvre du moyen de calcul et d'analyse, à partir de ladite donnée caractéristique, on fournit une information de diagnostic de l'état structurel présent ou prévisionnel de l'unité de roulement,
▪ moyennant la mise en oeuvre des moyens de communication de données et l'unité de recueil de données, on transfère à l'unité de recueil de données ladite donnée caractéristique ou ladite information de diagnostic,
▪ moyennant la mise en oeuvre du moyen d'évaluation d'un paramètre contextuel, on évalue si le paramètre contextuel est significatif soit de l'adéquation soit de l'inadéquation de la mesure du paramètre des conditions de roulage par le moyen de mesure, et on commande en conséquence le moyen de commande marche/arrêt.

Selon les cas, le contexte correspondant au paramètre contextuel est simple ou complexe, exogène et/ou endogène à l'unité de roulement, respectivement de l'engin à roues, tel que la vitesse de l'engin à roues, son accélération, son inclinaison, son orientation, l'effort subi par l'unité de roulement, la température ambiante ou celle de l'unité de roulement.

Selon une caractéristique, avec le moyen de mesure, on mesure la vitesse de rotation de l'unité de roulement.

On décrit maintenant brièvement les figures des dessins.

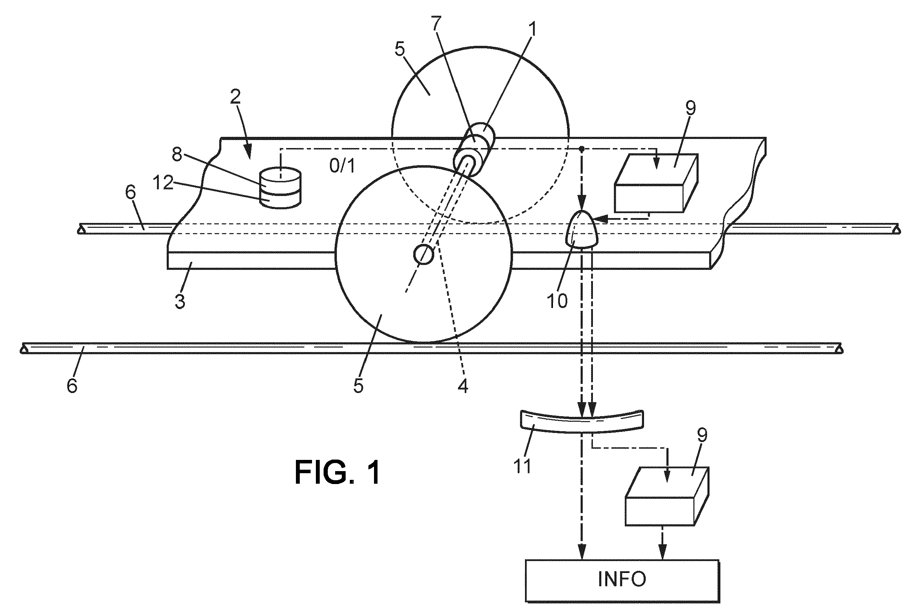

La figure 1 est un schéma structurel et fonctionnel illustrant le système de diagnostic selon l'invention et le procédé de mise en oeuvre, selon deux variantes alternatives, l'une ou un moyen de de calcul et d'analyse est embarqué sur l'engin à roues et l'autre où il est dissocié structurellement de lui.

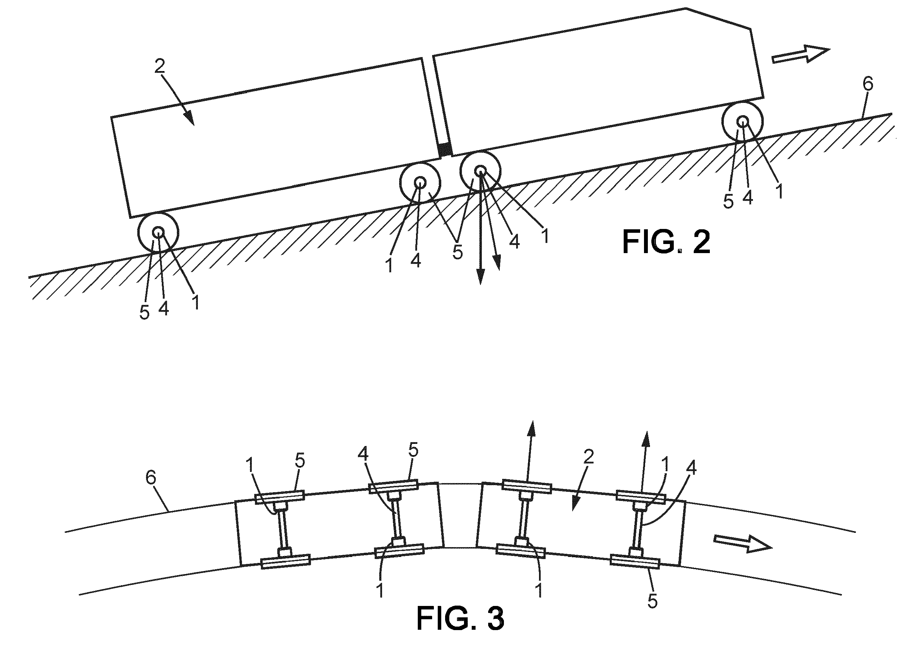

Les figures 2 et 3 sont deux schémas illustrant deux exemples de contexte influant sur la vitesse de l'unité de roulement, à savoir pour la figure 2, la représentation schématique en élévation d'un engin à roues (ici un véhicule ferroviaire) roulant sur des rails formant une voie inclinée et pour la figure 3 la représentation schématique de dessus du véhicule ferroviaire roulant sur des rails formant une courbe, les flèches représentant les sollicitations de l'unité de roulement résultant du contexte.

L'invention a pour objet un système de diagnostic de l'état structurel présent ou prévisionnel d'une unité de roulement 1 implantée sur un engin à roues 2 pour son déplacement, dont on a représenté sur la figure 1, de façon purement schématique, un élément de structure portante (châssis) 3, un essieu 4 supportant deux roues 5, par l'intermédiaire, précisément, d'unités de roulement. Cet essieu 4 peut être simplement porteur, ou bien il peut être moteur et/ou directeur. Dans le cas d'un engin à roues 2 étant un véhicule ferroviaire, les roues 5 reposent et son guidées par une paire de rails 6.

L'invention vise aussi bien un système de diagnostic de l'état structurel présent ou prévisionnel d'une unité de roulement 1 associée à un essieu 4 qu'une autre unité de roulement implantée sur un engin à roues 2 pour son déplacement.

Dans le contexte de l'invention, l'on entend par « unité de roulement », un ensemble constituant un roulement ou incluant un roulement et comprenant typiquement, au moins, une bague externe et une bague interne, les deux bagues étant coaxiales et espacées radialement, et une pluralité de corps roulants interposés entre les deux bagues et coopérant avec des chemins de roulement ménagés sur celles-ci, moyennant généralement une cage de roulement.

Dans le contexte de l'invention, une telle unité de roulement 1 est implantée sur l'engin à roues 2, étant portée par la structure portante de l'engin (châssis) 3 et portant l'essieu 4.

Dans le contexte de l'invention, un tel engin à roues 2 est typiquement un train, mais, plus généralement, peut être un engin mobile et/ou automobile tel qu'un chariot de transport ou de manutention ou un camion, cette liste n'étant pas limitative. De façon typique, un tel engin à roues 2 comporte une pluralité d'unités de roulement 1, plusieurs essieux 4, le cas échéant pour un train plusieurs boggies.

Un tel engin à roues 2 est amené à se déplacer ou à être déplacé sur une voie d'un réseau de voies, la paire de rails 6 dans le cas d'un train. Lors d'un tel déplacement, les unités de roulement 1 sont en fonctionnement rotatif.

Dans le contexte de l'invention, l'on entend par « voie » un espace apte au déplacement de l'engin à roues 2, notamment un espace aménagé pour permettre ou faciliter le déplacement. Ainsi, une voie peut être constituée de rails 6, dans le cas d'un train, d'une piste dans le cas d'un chariot, d'une chaussée dans le cas d'un camion.

Dans le contexte de l'invention, l'on entend par état « structurel » d'une unité de roulement 1, l'état de l'unité de roulement 1 eu égard à une caractéristique propre de celle-ci ayant un effet sur ses conditions de roulement. De façon typique, l'état structurel est la présence ou l'importance d'une altération de l'état de surface des chemins de roulement, de la bague, ou des corps roulants eux-mêmes, tel qu'un écaillage, ou une détérioration plus ou moins importante de la cage du roulement, qui peut avoir pour effet une irrégularité de la rotation, voire son blocage et *in fine* une destruction plus ou moins importante de l'unité de roulement 1. L'initiation d'une telle altération de l'unité de roulement 1 est peu décelable voire invisible à l'oeil, outre d'ailleurs qu'elle peut être masquée à la vue par des organes de l'unité de roulement 1 ou de l'engin à roues 2 sur lequel il est implanté. Une telle altération de l'unité de roulement 1 peut apparaître pour nombre de raisons, et de façon impromptue. Elle peut se dégrader de façon plus ou moins rapide. Et, elle peut perturber le bon fonctionnement de l'unité de roulement 1, et donc de l'engin à roues 2, voire mettre en cause la sécurité.

Dans le contexte de l'invention, l'on entend par « diagnostic » de l'état structurel d'une unité de roulement 1, la conclusion tirée sur la nature ou le degré de cet état structurel, comparativement soit à l'état structurel théorique parfait, notamment d'origine, de l'unité de roulement 1 soit à un état structurel considéré comme significatif, et notamment problématique ou plus ou moins critique, au regard d'un fonctionnement normal ou de la sécurité ou de la maintenance ou de la nécessité de remplacer ou de prévoir de remplacer l'unité de roulement 1 par une unité de roulement 1 neuve ou du moins ayant un état structurel convenable.

Le diagnostic de l'état structurel peut être présent ou prévisionnel. L'état structurel présent se réfère à celui, réel, qui est contemporain du diagnostic ou bien de la (ou des) mesure(s) qui le permet(tent). L'état structurel prévisionnel se réfère à celui, prospectif, qui peut être déduit d'une (ou de) mesure(s) et d'une loi d'évolution donnée de l'état structurel en fonction de la rotation de l'unité de roulement 1.

Ainsi, dans le contexte de l'invention et dans une application typique, l'on vise à tirer une conclusion sur la nature ou le degré de l'état structurel, prévisionnel, d'une ou de chacune des unités de roulement 1 de l'engin à roues 2, au regard de la normalité du fonctionnement ou de la sécurité ou de la maintenance ou du remplacement.

Le système de diagnostic est décrit en détail dans le cas où il concerne une unique unité de roulement 1. Mais, il va de soi qu'il peut être appliqué et adapté au cas où l'engin à roues 2 comporte plusieurs unités de roulement 1, le système de diagnostic pouvant alors être individuel et séparé pour chaque unité de roulement 1 ou, pour partie, commun à plusieurs unités de roulement 1, un ou plusieurs moyens du système étant communs à une pluralité d'unités de roulement 1.

Le système de diagnostic comprend, en premier lieu, un moyen de mesure 7 de la valeur d'un paramètre des conditions de roulage de l'unité de roulement 1 caractéristique de son état structurel.

En l'espèce, le moyen de mesure 7 inclut un capteur de vitesse de rotation de l'unité de roulement 1, étant couplé à un codeur mobile de l'unité de roulement 1.

Le moyen de mesure 7 est embarqué sur l'engin à roues 2 et associé à l'unité de roulement 1.

Le moyen de mesure 7 est responsif à un moyen de commande marche/arrêt 8. On entend par là que le moyen de mesure 7 répond au moyen de commande marche/arrêt 8 en réagissant à cette commande soit pour être mis en marche, le moyen de mesure 7 assurant alors sa fonction de mesure, soit pour être mis à l'arrêt, le moyen de mesure 7 ne fonctionnant plus c'est-à-dire ne délivrant aucun signal, aucune information, aucune donnée. On entend ici par marche/arrêt à la fois le fait que le moyen de mesure 7 exécute/n'exécute pas la mesure, en restant sous toujours apte à le faire et le fait que le moyen de mesure 7

Le moyen de mesure 7 est apte, lorsqu'il est en marche, à mesurer ladite valeur dudit paramètre (entrée) et à fournir (sortie) une donnée caractéristique desdites conditions de roulage.

Le système de diagnostic comprend, en deuxième lieu, un moyen de calcul et d'analyse 9, apte, à partir de ladite donnée caractéristique, à fournir une information de diagnostic de l'état structurel présent ou prévisionnel de l'unité de roulement 1, dans le sens qui a été donné précédemment à ces termes.

Selon les cas, le moyen de de calcul et d'analyse 9 est embarqué sur l'engin à roues 2 ou bien il est dissocié structurellement de lui. Ces deux réalisations sont représentées sur la même figure 1.

Le système de diagnostic comprend, en troisième lieu, un moyen de communication de données 10, embarqué sur l'engin à roues 2, apte à transférer des données dans une certaine zone de couverture. Selon les arrangements du système de diagnostic, les données transférées sont ladite donnée caractéristique ou bien ladite information de diagnostic. Le premier cas est typique de l'arrangement où le moyen de de calcul et d'analyse 9 est dissocié structurellement de l'engin à roues 2. Le second cas est typique de l'arrangement où le moyen de de calcul et d'analyse 9 est embarqué sur l'engin à roues 2.

Le système de diagnostic comprend, en quatrième lieu, une unité de recueil de données 11, par exemple une antenne, dissociée structurellement de l'engin à roues 2, apte à se trouver à un moment ou à un autre dans ladite zone de couverture du moyen de communication de données 10 et apte, selon les arrangements du système de diagnostic, à recueillir ladite donnée caractéristique ou ladite information de diagnostic, Le premier cas est typique de l'arrangement où le moyen de de calcul et d'analyse 9 est dissocié structurellement de l'engin à roues 2. Le second cas est typique de l'arrangement où le moyen de de calcul et d'analyse 9 est embarqué sur l'engin à roues 2.

Selon l'invention, le système de diagnostic comprend, en cinquième lieu, un moyen d'évaluation d'un paramètre contextuel 12, significatif soit de l'adéquation soit de l'inadéquation de la mesure du paramètre des conditions de roulage par le moyen de mesure 7.

Le contexte dont il est question est exogène et/ou endogène à l'unité de roulement 1, respectivement à l'engin à roues 2. Il est simple (constitué d'un seul contexte) ou complexe (comprenant plusieurs contextes). Dans tous les cas, il influe sur la vitesse de l'unité de roulement 1 ou sur la variation de cette vitesse ou sur le diagnostic prenant en compte cette vitesse ou sa variation.

Le contexte dont il est question est par exemple la vitesse et/ou l'accélération de l'engin à roues 2 et/ou son inclinaison et/ou son orientation et/ou l'effort subi par l'unité de roulement 1 et/ou la température ambiante ou celle de l'unité de roulement 1, cette liste n'étant pas limitative. S'agissant de la vitesse, de l'accélération, de l'inclinaison, de l'orientation, il peut s'agir soit de celle dans la direction de déplacement de l'engin à roues 2 soit de celle dans une direction autre, et en particulier dans une direction transversale à la direction de déplacement de l'engin à roues 2.

Par « paramètre contextuel », l'on entend une variable qui est la mesure du contexte, c'est-à-dire le reflète.

Par paramètre contextuel « significatif de l'adéquation de la mesure du paramètre des conditions de roulage par le moyen de mesure 7 », l'on vise le cas où le contexte est tel, exprimé par le paramètre contextuel, que la mesure du paramètre des conditions de roulage par le moyen de mesure 7 est pertinente au regard du diagnostic, ou, en d'autres termes, que le contexte ne perturbe pas, ou pas significativement, le diagnostic fait à partir de la mesure du paramètre des conditions de roulage (vitesse de l'unité de roulement 1). Dans un tel cas, il est prévu, grâce à l'invention, que le moyen de mesure 7 soit en fonctionnement et mesure effectivement le paramètre des conditions de roulage (vitesse de l'unité de roulement 1).

Inversement, par paramètre contextuel « significatif de l'inadéquation de la mesure du paramètre des conditions de roulage par le moyen de mesure 7 », l'on vise le cas où le contexte est tel, exprimé par le paramètre contextuel, que la mesure du paramètre des conditions de roulage par le moyen de mesure 7 n'est pas pertinente au regard du diagnostic, ou, en d'autres termes, que le contexte perturbe, du moins significativement, le diagnostic fait à partir de la mesure du paramètre des conditions de roulage (vitesse de l'unité de roulement 1). Dans un tel cas, il est prévu, grâce à l'invention, que le moyen de mesure 7 soit à l'arrêt et ne mesure pas le paramètre des conditions de roulage (vitesse de l'unité de roulement 1) ou du moins ne fournisse pas en sortie une donnée caractéristique desdites conditions de roulage.

Selon l'invention, le système de diagnostic comprend, en sixième lieu, le moyen de commande marche/arrêt 8, déjà évoqué, responsif au moyen d'évaluation d'un paramètre contextuel 12. On entend par là que le moyen de commande marche/arrêt 8 répond au moyen d'évaluation d'un paramètre contextuel 12 par une commande de marche ou une commande d'arrêt.

Comme déjà exposé, le moyen de commande marche/arrêt 8 est apte à commander la marche ou l'arrêt du moyen de mesure 7, selon que le paramètre contextuel évalué est significatif soit de l'adéquation soit de l'inadéquation de la mesure du paramètre des conditions de roulage par le moyen de mesure 7.

Le moyen d'évaluation d'un paramètre contextuel 12 peut faire l'objet de différentes réalisations adaptées au paramètre contextuel que l'on souhaite prendre en compte.

Par exemple, le moyen d'évaluation d'un paramètre contextuel 12 peut inclure un tachymètre si le paramètre contextuel est la vitesse de l'engin à roues 2 ou un paramètre fonction de la vitesse.
Il peut inclure un accéléromètre si le paramètre contextuel est l'accélération de l'engin à roues 2.
Il peut inclure un inclinomètre si le paramètre contextuel est l'inclinaison de l'engin à roues 2.
Il peut inclure un gyromètre si le paramètre contextuel est l'orientation de l'engin à roues 2.
Il peut inclure un capteur d'effort si le paramètre contextuel est l'effort subi par l'unité de roulement 1.
Il peut inclure un capteur de température si le paramètre contextuel est la température, à savoir soit la température ambiante soit la température de l'unité de roulement 1.

Ces réalisations ne sont pas exclusives d'autres et d'autres paramètres contextuels.

Le cas échéant, le système de diagnostic comprend plusieurs moyens d'évaluation 12 de plusieurs paramètres contextuels différents choisis dans le groupe incluant un tachymètre, un accéléromètre, un inclinomètre, un gyromètre, un capteur d'effort, un capteur de température, celle liste n'étant pas limitative.

Dans la réalisation objet du schéma de la figure 1, le moyen d'évaluation d'un paramètre contextuel 12 et le moyen de commande marche/arrêt 8 sont embarqués sur l'engin à roues 2. Mais, dans une autre réalisation, il peut être envisagé que le moyen d'évaluation d'un paramètre contextuel 12 soit dissocié structurellement de l'engin à roues 2, auquel cas, il est prévu un moyen de communication entre le moyen d'évaluation d'un paramètre contextuel 12, le moyen de commande marche/arrêt 8 et le moyen de mesure 7.

Dans la réalisation objet du schéma de la figure 1, le moyen d'évaluation d'un paramètre contextuel 12 et le moyen de commande marche/arrêt 8 sont associés structurellement pour former un seul et même ensemble.

Par ailleurs, dans une possible réalisation, il peut être envisagé que le moyen d'évaluation d'un paramètre contextuel 12 et le moyen de mesure 7 soient associés structurellement, par exemple lorsque le moyen d'évaluation d'un paramètre contextuel 12 inclut un capteur de température de l'unité de roulement 1.

Selon un développement, le moyen d'évaluation d'un paramètre contextuel 12 et/ou le moyen de commande marche/arrêt 8 est/sont réglable(s) et/ou débrayable(s).

Comme indiqué, le système de diagnostic peut être destiné à une seule unité de roulement 1 ou bien il peut être destiné à plusieurs unités de roulement 1 implantées sur un même engin à roues 2. Dans ce cas, le système de diagnostic peut comprendre un ou plusieurs moyens communs à une pluralité d'unités de roulement 1 choisis dans les moyens de mesure 7, les moyen de calcul et d'analyse 9, les moyens de communication de données 10, les moyen d'évaluation d'un paramètre contextuel 12, les moyens de commande marche/arrêt 8.

Le procédé de mise en oeuvre d'un tel système de diagnostic de l'état structurel présent ou prévisionnel d'une unité de roulement 1 implantée sur un engin à roues 2 pour son déplacement découle de la structure même du système de diagnostic.

D'une part, moyennant la mise en oeuvre du moyen de mesure 7, responsifs au moyen de commande marche/arrêt 8, lorsque le moyen de mesure 7 est en marche, on mesure dans le temps la valeur d'un paramètre des conditions de roulage de l'unité de roulement 1 caractéristique de son état structurel et on fournit une donnée caractéristique desdites conditions de roulage.

D'autre part, moyennant la mise en oeuvre du moyen de calcul et d'analyse 9, à partir de ladite donnée caractéristique, on fournit une information de diagnostic de l'état structurel présent ou prévisionnel de l'unité de roulement 1.

Enfin, moyennant la mise en oeuvre des moyens de communication de données 10 et l'unité de recueil de données 11, on transfère à l'unité de recueil de données 11 ladite donnée caractéristique ou ladite information de diagnostic.

Ce processus est adapté selon la structure du système de diagnostic, notamment la localisation du moyen de calcul et d'analyse 9, comme précédemment exposé.

Par ailleurs, selon l'invention, moyennant la mise en oeuvre du moyen d'évaluation d'un paramètre contextuel 12, on évalue si le paramètre contextuel est significatif soit de l'adéquation soit de l'inadéquation de la mesure du paramètre des conditions de roulage par le moyen de mesure 7, et on commande en conséquence le moyen de commande marche/arrêt 8.

Dans le procédé, le contexte correspondant au paramètre contextuel est simple ou complexe, exogène et/ou endogène à l'unité de roulement 1, respectivement à l'engin à roues 2, tel que l'accélération de l'engin à roues 2, son inclinaison, son orientation, l'effort subi par l'unité de roulement 1, la température ambiante ou celle de l'unité de roulement 1.

Comme précédemment indiqué, dans la réalisation plus spécialement considérée, avec le moyen de mesure 7, on mesure la vitesse de rotation de l'unité de roulement 1.

## Revendications

1. Système de diagnostic de l'état structurel présent ou prévisionnel d'une unité de roulement (1) implantée sur un engin à roues (2) pour son déplacement, qui comprend :
▪ au moins un moyen de mesure (7) de la valeur d'un paramètre des conditions de roulage de l'unité de roulement (1) caractéristique de son état structurel, embarqué sur l'engin (2) et associé à l'unité de roulement (1), apte en marche, à mesurer ladite valeur dudit paramètre et à fournir une donnée caractéristique desdites conditions de roulage,
▪ au moins un moyen de calcul et d'analyse (9), apte, à partir de ladite donnée caractéristique, à fournir une information de diagnostic de l'état structurel présent ou prévisionnel de l'unité de roulement (1),
▪ au moins un moyen de communication de données (10), embarqué sur l'engin à roues (2), apte à transférer dans une zone de couverture ladite donnée caractéristique ou ladite information de diagnostic,
▪ au moins un moyen d'évaluation d'un paramètre contextuel (12) significatif soit de l'adéquation soit de l'inadéquation de la mesure du paramètre des conditions de roulage par le moyen de mesure (7),
**caractérisé en ce qu'**il comprend au moins une unité de recueil de données (11), dissociée structurellement de l'engin à roues (2), apte à se trouver dans ladite zone de couverture et à recueillir ladite donnée caractéristique ou ladite information de diagnostic,
et **en ce que**
▪ ledit au moins un moyen de mesure (7) est responsif à un moyen de commande marche/arrêt (8), et
▪ le moyen de commande marche/arrêt (8) est responsif au moyen d'évaluation d'un paramètre contextuel (12) propre à affecter la mesure du paramètre des conditions de roulage, qui est apte à commander la marche ou l'arrêt du moyen de mesure (7), selon que le paramètre contextuel évalué est significatif soit de l'adéquation soit de l'inadéquation de la mesure du paramètre des conditions de roulage par le moyen de mesure (7).

2. Système de diagnostic selon la revendication 1, dans lequel le moyen d'évaluation d'un paramètre contextuel (12) inclut l'un des moyens suivants :
- un tachymètre, le paramètre contextuel étant la vitesse de l'engin à roues (2) ou un paramètre fonction de la vitesse ;
- un accéléromètre, le paramètre contextuel étant l'accélération de l'engin à roues (2) ;
- un inclinomètre, le paramètre contextuel étant l'inclinaison de l'engin à roues (2) ;
- un gyromètre, le paramètre contextuel étant l'orientation de l'engin à roues (2) ;
inclus- t un capteur d'effort, le paramètre contextuel étant l'effort subi par l'unité de roulement (1) ;
- un capteur de température, notamment ambiante ou de l'unité de roulement (1), le paramètre contextuel étant la température, notamment ambiante ou de l'unité de roulement (1), respectivement.

3. Système de diagnostic selon l'une quelconque des revendications 1 à 2, comprenant plusieurs moyens d'évaluation de plusieurs paramètres contextuels différents (12) choisis dans le groupe incluant un tachymètre, accéléromètre, un inclinomètre, un gyromètre, un capteur d'effort, un capteur de température.

4. Système de diagnostic selon l'une quelconque des revendications 1 à 3, dans lequel le moyen d'évaluation d'un paramètre contextuel (12) et le moyen de commande marche/arrêt (8) sont embarqués sur l'engin à roues (2).

5. Système de diagnostic selon l'une quelconque des revendications 1 à 4, dans lequel le moyen d'évaluation d'un paramètre contextuel (12) est dissocié structurellement de l'engin à roues (2), moyennant un moyen de communication (10) entre le moyen d'évaluation d'un paramètre contextuel (12), le moyen de commande marche/arrêt (8) et le moyen de mesure (7).

6. Système de diagnostic selon l'une quelconque des revendications 1 à 5, dans lequel le moyen de mesure (7) de la valeur d'un paramètre des conditions de roulage de l'unité de roulement (1) inclut un capteur de vitesse de rotation de l'unité de roulement (1).

7. Système de diagnostic selon l'une quelconque des revendications 1 à 6, dans lequel le moyen de de calcul et d'analyse (9) est embarqué sur l'engin à roues (2).

8. Système de diagnostic selon l'une quelconque des revendications 1 à 6, dans lequel le moyen de de calcul et d'analyse (9) est dissocié structurellement de l'engin à roues (2).

9. Système de diagnostic selon l'une quelconque des revendications 1 à 8, dans lequel le moyen d'évaluation d'un paramètre contextuel (12) et le moyen de commande marche/arrêt (8) sont associés structurellement.

10. Système de diagnostic selon l'une quelconque des revendications 1 à 9, dans lequel le moyen d'évaluation d'un paramètre contextuel (12) et le moyen de mesure (7) sont associés structurellement.

11. Système de diagnostic selon l'une quelconque des revendications 1 à 10, dans lequel le moyen d'évaluation d'un paramètre contextuel (12) et/ou le moyen de commande marche/arrêt (8) est/sont réglable(s) et/ou débrayable(s).

12. Système de diagnostic selon l'une quelconque des revendications 1 à 11 destiné à plusieurs unités de roulement (1) implantées sur un engin à roues (2) pour son déplacement, qui comprend un ou plusieurs moyens communs à une pluralité d'unités de roulement (1) choisis dans les moyens de mesure (7), les moyen de calcul et d'analyse (9), les moyens de communication de données (10), les moyen d'évaluation d'un paramètre contextuel (12), les moyens de commande marche/arrêt (8).

13. Procédé de mise en oeuvre d'un système de diagnostic de l'état structurel présent ou prévisionnel d'une unité de roulement (1) implantée sur un engin à roues (2) pour son déplacement selon l'une quelconque des revendications 1 à 12, dans lequel :
▪ moyennant la mise en oeuvre du moyen de mesure (7), responsifs au moyen de commande marche/arrêt (8), lorsque le moyen de mesure (7) est en marche, on mesure dans le temps la valeur d'un paramètre des conditions de roulage de l'unité de roulement (1) caractéristique de son état structurel et on fournit une donnée caractéristique desdites conditions de roulage,
▪ moyennant la mise en oeuvre du moyen de calcul et d'analyse (9), à partir de ladite donnée caractéristique, on fournit une information de diagnostic de l'état structurel présent ou prévisionnel de l'unité de roulement (1),
▪ moyennant la mise en oeuvre des moyens de communication de données (10) et l'unité de recueil de données (11), on transfère à l'unité de recueil de données (11) ladite donnée caractéristique ou ladite information de diagnostic,
▪ moyennant la mise en oeuvre du moyen d'évaluation d'un paramètre contextuel (12), on évalue si le paramètre contextuel est significatif soit de l'adéquation soit de l'inadéquation de la mesure du paramètre des conditions de roulage par le moyen de mesure (7), et on commande en conséquence le moyen de commande marche/arrêt (8).

14. Procédé selon la revendication 13, dans lequel le contexte correspondant au paramètre contextuel est simple ou complexe, exogène et/ou endogène à l'unité de roulement (1), tel que la vitesse, l'accélération de l'engin à roues (2), son inclinaison, son orientation, l'effort subi par l'unité de roulement (1), la température ambiante ou celle de l'unité de roulement (1).

15. Procédé selon l'une quelconque des revendications 13 et 14, dans lequel avec le moyen de mesure (7), on mesure la vitesse de rotation de l'unité de roulement (1).

## Patentansprüche

1. Diagnosesystem für den gegenwärtigen oder voraussichtlichen strukturellen Zustand einer Lagereinheit (1), die an einem Fahrzeug mit Rädern (2) für dessen Fortbewegung angeordnet ist, welches aufweist:
▪ wenigstens ein Messmittel (7) für den Wert eines Parameters der Fahrbedingungen der Lagereinheit (1), der für ihren strukturellen Zustand charakteristisch ist, das sich an Bord des Fahrzeugs (2) befindet und der Lagereinheit (1) zugeordnet ist, und das geeignet ist, während des Betriebs den Wert des Parameters zu messen und eine charakteristische Größe der Fahrbedingungen zu liefern,
▪ wenigstens ein Berechnungs- und Analysemittel (9), das geeignet ist, ausgehend von der charakteristischen Größe eine Diagnoseinformation über den gegenwärtigen oder voraussichtlichen strukturellen Zustand der Lagereinheit (1) zu liefern,
▪ wenigstens ein Datenkommunikationsmittel (10), das sich an Bord des Fahrzeugs mit Rädern (2) befindet und geeignet ist, in einem Reichweitenbereich die charakteristische Größe oder die Diagnoseinformation zu übermitteln,
▪ wenigstens ein Auswertungsmittel für einen Kontextparameter (12), der entweder hinsichtlich der Adäquatheit oder hinsichtlich der Inadäquatheit der Messung des Parameters der Fahrbedingungen durch das Messmittel (7) indikativ ist,
**dadurch gekennzeichnet, dass** es wenigstens eine Datenerfassungseinheit (11) aufweist, die strukturell von dem Fahrzeug mit Rädern (2) getrennt ist und geeignet ist, sich in dem Reichweitenbereich zu befinden und die charakteristische Größe oder die Diagnoseinformation zu erfassen,
und dadurch, dass
▪ das wenigstens eine Messmittel (7) auf ein Start-Stopp-Steuerungsmittel (8) reagiert, und
▪ das Start-Stopp-Steuerungsmittel (8) auf das Auswertungsmittel für einen Kontextparameter (12) reagiert, der geeignet ist, die Messung des Parameters der Fahrbedingungen zu beeinträchtigen, wobei es geeignet ist, das Einschalten oder das Ausschalten des Messmittels (7) anzusteuern, je nachdem, ob der ausgewertete Kontextparameter für die Adäquatheit oder die Inadäquatheit der Messung des Parameters der Fahrbedingungen durch das Messmittel (7) indikativ ist.

2. Diagnosesystem nach Anspruch 1, wobei das Auswertungsmittel für einen Kontextparameter (12) eines der folgenden Mittel beinhaltet:
- einen Tachometer, wobei der Kontextparameter die Geschwindigkeit des Fahrzeugs mit Rädern (2) oder ein von der Geschwindigkeit abhängiger Parameter ist;
- einen Beschleunigungsmesser, wobei der Kontextparameter die Beschleunigung des Fahrzeugs mit Rädern (2) ist;
- einen Neigungsmesser, wobei der Kontextparameter die Neigung des Fahrzeugs mit Rädern (2) ist;
- ein Gyrometer, wobei der Kontextparameter die Ausrichtung des Fahrzeugs mit Rädern (2) ist;
- einen Kraftsensor, wobei der Kontextparameter die Kraft ist, die auf die Lagereinheit (1) einwirkt;
- einen Temperatursensor, insbesondere für die Umgebungstemperatur oder die Temperatur der Lagereinheit (1), wobei der Kontextparameter die Temperatur ist, insbesondere die Umgebungstemperatur bzw. die Temperatur der Lagereinheit (1).

3. Diagnosesystem nach einem der Ansprüche 1 bis 2, welches mehrere Auswertungsmittel für mehrere verschiedene Kontextparameter (12) aufweist, die aus der Gruppe ausgewählt sind, welche einen Tachometer, einen Beschleunigungsmesser, einen Neigungsmesser, ein Gyrometer, einen Kraftsensor, einen Temperatursensor beinhaltet.

4. Diagnosesystem nach einem der Ansprüche 1 bis 3, wobei sich das Auswertungsmittel für einen Kontextparameter (12) und das Start-Stopp-Steuerungsmittel (8) an Bord des Fahrzeugs mit Rädern (2) befinden.

5. Diagnosesystem nach einem der Ansprüche 1 bis 4, wobei das Auswertungsmittel für einen Kontextparameter (12) strukturell von dem Fahrzeug mit Rädern (2) getrennt ist, mittels eines Kommunikationsmittels (10) zwischen dem Auswertungsmittel für einen Kontextparameter (12), dem Start-Stopp-Steuerungsmittel (8) und dem Messmittel (7).

6. Diagnosesystem nach einem der Ansprüche 1 bis 5, wobei das Messmittel (7) für den Wert eines Parameters der Fahrbedingungen der Lagereinheit (1) einen Drehzahlsensor für die Lagereinheit (1) beinhaltet.

7. Diagnosesystem nach einem der Ansprüche 1 bis 6, wobei sich das Berechnungs- und Analysemittel (9) an Bord des Fahrzeugs mit Rädern (2) befindet.

8. Diagnosesystem nach einem der Ansprüche 1 bis 6, wobei das Berechnungs-und Analysemittel (9) strukturell von dem Fahrzeug mit Rädern (2) getrennt ist.

9. Diagnosesystem nach einem der Ansprüche 1 bis 8, wobei das Auswertungsmittel für einen Kontextparameter (12) und das Start-Stopp-Steuerungsmittel (8) strukturell verbunden sind.

10. Diagnosesystem nach einem der Ansprüche 1 bis 9, wobei das Auswertungsmittel für einen Kontextparameter (12) und das Messmittel (7) strukturell verbunden sind.

11. Diagnosesystem nach einem der Ansprüche 1 bis 10, wobei das Auswertungsmittel für einen Kontextparameter (12) und/oder das Start-Stopp-Steuerungsmittel (8) einstellbar und/oder ausrückbar sind (ist).

12. Diagnosesystem nach einem der Ansprüche 1 bis 11, welches für mehrere Lagereinheiten (1) bestimmt ist, die an einem Fahrzeug mit Rädern (2) für dessen Fortbewegung angeordnet sind, und welches ein oder mehrere Mittel aufweist, die mehreren Lagereinheiten (1) gemeinsam sind und aus den Messmitteln (7), den Berechnungs- und Analysemitteln (9), den Datenkommunikationsmitteln (10), den Auswertungsmitteln für einen Kontextparameter (12) und den Start-Stopp-Steuerungsmitteln (8) ausgewählt sind.

13. Verfahren für den Einsatz eines Diagnosesystems für den gegenwärtigen oder voraussichtlichen strukturellen Zustand einer Lagereinheit (1), die an einem Fahrzeug mit Rädern (2) für dessen Fortbewegung angeordnet ist, nach einem der Ansprüche 1 bis 12, wobei:
▪ mittels des Einsatzes des Messmittels (7), das auf das Start-Stopp-Steuerungsmittel (8) reagiert, wenn das Messmittel (7) in Betrieb ist, über die Zeit der Wert eines Parameters der Fahrbedingungen der Lagereinheit (1) gemessen wird, der für ihren strukturellen Zustand charakteristisch ist, und eine charakteristische Größe dieser Fahrbedingungen geliefert wird,
▪ mittels des Einsatzes des Berechnungs- und Analysemittels (9), ausgehend von der charakteristischen Größe, eine Diagnoseinformation über den gegenwärtigen oder voraussichtlichen strukturellen Zustand der Lagereinheit (1) geliefert wird,
▪ mittels des Einsatzes der Datenkommunikationsmittel (10) und der Datenerfassungseinheit (11) die charakteristische Größe oder die Diagnoseinformation zu der Datenerfassungseinheit (11) übermittelt wird,
▪ mittels des Einsatzes des Auswertungsmittels für einen Kontextparameter (12) beurteilt wird, ob der Kontextparameter entweder hinsichtlich der Adäquatheit oder hinsichtlich der Inadäquatheit der Messung des Parameters der Fahrbedingungen durch das Messmittel (7) indikativ ist, und das Start-Stopp-Steuerungsmittel (8) dementsprechend gesteuert wird.

14. Verfahren nach Anspruch 13, wobei der dem Kontextparameter entsprechende Kontext einfach oder komplex, exogen und/oder endogen bezüglich der Lagereinheit (1) ist, wie etwa die Geschwindigkeit, die Beschleunigung des Fahrzeugs mit Rädern (2), seine Neigung, seine Ausrichtung, die auf die Lagereinheit (1) einwirkende Kraft, die Umgebungstemperatur oder die Temperatur der Lagereinheit (1).

15. Verfahren nach einem der Ansprüche 13 und 14, wobei mit dem Messmittel (7) die Drehzahl der Lagereinheit (1) gemessen wird.

## Claims

1. System for diagnosing the present or forecast structural state of a rolling unit (1) installed on wheeled equipment (2) for the movement thereof, which includes:
▪ at least one means of measurement (7) of the value of a parameter of the rolling conditions of the rolling unit (1) characteristic of the structural state thereof, onboard the equipment (2) and combined with the rolling unit (1), suited while running for measuring said value of said parameter and providing data characteristic of said rolling conditions;
▪ at least one means of calculation and analysis (9), suited, based on said characteristic data, for supplying diagnostic information on the present or forecast structural state of the rolling unit (1),
▪ at least one means of data communication (10), onboard the wheeled equipment (2), suited for transferring said characteristic data or said diagnostic information into a coverage area;
▪ at least one means of evaluation of a contextual parameter (12) showing either the adequacy or the inadequacy of the measurement by the means of measurement (7) of the parameter of the rolling conditions;
**characterized in that** it comprises at least one data collection unit (11), structurally disassociated from the wheeled equipment (2), suited for being located in said coverage area and collecting said characteristic data or said diagnostic information;
and **in that**
▪ said at least one means of measurement (7) is responsive to a means of run/stop control (8), and
▪ the means of run/stop control (8) is responsive to the means of evaluation of a contextual parameter (12) specific to assigning the measurement of the parameter of the rolling conditions, which is suited for controlling the running or stopping of the means of measurement (7), according to whether the contextual parameter evaluated shows either the adequacy or inadequacy of the measurement of the parameter of the rolling conditions by the means of measurement (7).

2. Diagnostic system according to claim 1, wherein the means of evaluation of a contextual parameter (12) includes one of the following means:
- a tachometer, where the contextual parameter is the speed of the wheeled equipment (2) or a parameter [that is a] function of the speed;
- an accelerometer, where the contextual parameter is the acceleration of the wheeled equipment (2);
- an inclinometer, where the contextual parameter is the tilt of the wheeled vehicle (2);
- a gyroscope, where the contextual parameter is the orientation of the wheeled equipment (2);
- a stress gauge, where the contextual parameter is the stress experienced by the rolling unit (1);
- a temperature sensor, in particular environmental or of the rolling unit (1), where the contextual parameter is the temperature, in particular environmental or of the rolling unit (1), respectively.

3. Diagnostic system according to any one of claims 1 to 2, comprising several means of evaluation for several different contextual parameters (12) selected from the group including a tachometer, an accelerometer, an inclinometer, a gyroscope, a stress gauge, and a temperature sensor.

4. Diagnostic system according to any one of claims 1 to 3, wherein the means of evaluation of a contextual parameter (12) and the means of run/stop control (8) are on board on the wheeled equipment (2).

5. Diagnostic system according to any one of claims 1 to 4, wherein the means of evaluation of a contextual parameter (12) is structurally disassociated from the wheeled equipment (2), by means of a communication means (10) between the means of evaluation of a contextual parameter (12), the means of run/stop control (8) and the means of measurement (7).

6. Diagnostic system according to any one of claims 1 to 5, wherein the means of measurement (7) of the value of a parameter of the rolling conditions of the rolling unit (1) includes a rotational speed sensor for the rolling unit (1).

7. Diagnostic system according to any one of claims 1 to 6, wherein the means of calculation and analysis (9) is on board the wheeled equipment (2).

8. Diagnostic system according to any one of claims 1 to 6, wherein the means of calculation and analysis (9) is structurally disassociated from the wheeled equipment (2).

9. Diagnostic system according to any one of claims 1 to 8, wherein the means of evaluation of a contextual parameter (12) and the means of run/stop control (8) are structurally combined.

10. Diagnostic system according to any one of claims 1 to 9, wherein the means of evaluation of a contextual parameter (12) and the means of measurement (7) are structurally combined.

11. Diagnostic system according to any one of claims 1 to 10, wherein the means of evaluation of a contextual parameter (12) and/or the means of run/stop control (8) is/are adjustable and/or releasable.

12. Diagnostic system according to any one of claims 1 to 11 intended for several rolling units (1) installed on wheeled equipment (2) for movement thereof, which includes one or more means shared by a plurality of rolling units (1) chosen among the means of measurement (7), means of calculation and analysis (9), means of data communication (10), means of evaluation of a contextual parameter (12) and means of run/stop control (8).

13. Process for implementation of a diagnostic system the present or forecast structural state of a rolling unit (1) installed on wheeled equipment (2) for movement thereof according to any one of claims 1 to 12, wherein:
▪ by means of the implementation of the means of measurement (7), responsive to the means of run/stop control (8) when the means of measurement (7) is running, the value of a parameter of the rolling conditions of the rolling unit (1) characteristic of the structural state thereof is measured over time and data characteristic of said rolling conditions is provided;
▪ by means of the implementation of the means of calculation and analysis (9), based on said characteristic data, diagnostic information on the present or forecast structural state of the rolling unit (1) is provided;
▪ by means of the implementation of the means of data communication (10) and the unit for data collection (11), said characteristic data or said diagnostic information is transferred to the unit for data collection (11);
▪ by means of the implementation of the means of evaluation of a contextual parameter (12), it is evaluated whether the contextual parameter shows either the adequacy or inadequacy of the measurement of the parameter of the rolling conditions by the means of measurement (7), and as a consequence the means of run/stop control (8) is controlled.

14. Process according to claim 13, wherein the context corresponding to the contextual parameter is simple or complex, exogenous and/or endogenous to the rolling unit (1), such as speed, acceleration of the wheeled equipment (2), the tilt thereof, the orientation thereof, the strain experienced by the rolling unit (1), the environmental temperature or the temperature of the rolling unit (1)

15. Process according to any one of claims 13 and 14, wherein with the means of measurement (7), the rotational speed of the rolling unit (1) is measured.
